Europäisches Patentamt

European Patent Office

Office européen des brevets

(19)

(11) Veröffentlichungsnummer: **0 084 605**
**A1**

## (12) EUROPÄISCHE PATENTANMELDUNG

(21) Anmeldenummer: 82109462.0

(22) Anmeldetag: 13.10.82

(51) Int. Cl.³: **H 04 N 5/64**

(30) Priorität: 23.01.82 DE 3202046

(43) Veröffentlichungstag der Anmeldung: 03.08.83
Patentblatt 83/31

(84) Benannte Vertragsstaaten: **AT BE CH DE FR GB IT LI**

(71) Anmelder: **GRUNDIG E.M.V. Elektro-Mechanische
Versuchsanstalt Max Grundig & Co KG,
Kurgartenstrasse 37, D-8510 Fürth (DE)**

(72) Erfinder: **Mangold, Hans, Bussardstrasse 18,
D-8510 Fürth/Bay. (DE)**
Erfinder: **Eckert, Hans, Krainer Strasse 32,
D-8500 Nürnberg (DE)**
Erfinder: **Schönborn, Jürgen, Sandleithe 41,
D-8510 Fürth-Vach (DE)**

(54) **Fernsehgerät.**

(57) Das Fernsehgerät besteht aus mehreren Geräteteilen, wobei ein Gerätebildteil (1), das einen besonders flachen Bildschirm (3) aufweist, an mehrere Seiten eines Geräteempfangsteils (2) über eine als Scharnier ausgebildete Steckleiste (4) ansteckbar ist.

EP 0 084 605 A1

- 1 -

FERNSEHGERÄT

Beschreibung

Die Erfindung betrifft ein aus mehreren Geräteteilen zusammensetzbares Fernsehgerät.

Die Größe und Handlichkeit von Fernsehgeräten wird im wesentlichen durch die Bildröhre bestimmt. Hierbei wirkt sich die bisher beachtliche Bautiefe der Bildröhre nachteilig auf die Gestaltung der Geräte, insbesondere von tragbaren Fernsehgeräten, aus. Durch die Entwicklung von sehr flachen plattenförmigen Bildschirmen von einer geringen, nur wenige Zentimeter betragenden Bautiefe, sind Geräte mit geringer Gesamttiefe zu entwickeln, wobei sich neue und vorteilhafte Gerätekonzeptionen, besonders für tragbare Fernsehgeräte ergeben.

Es ist somit Aufgabe der Erfindung, den Nachteil der Fernsehgeräte mit Bildschirmen bisheriger Ausführung,

- 2 -

der sich vor allem in der sehr großen Bautiefe der Geräte zeigt, durch Verwendung eines flachen Bildschirmes
zu beseitigen. Gleichzeitig soll eine Lösung gefunden
werden, um ein Fernsehgerät mit wenigen Handgriffen für
verschiedene Einsatzmöglichkeiten umzurüsten, so z.B.
mit liegendem Bedienungsteil und mit in verschiedenen
Lagen aufgestecktem Bildschirm, als flaches hängendes
oder stehendes Gerät, als bequem tragbares Gerät, als
Kombinationsgerät mit eingebautem Videorecorder.

Diese Aufgabe wird gemäß der Erfindung durch die im
Kennzeichen des Anspruchs 1 enthaltenen Maßnahmen gelöst.
Bevorzugte Ausführungsbeispiele der Erfindung sind in
den Unteransprüchen gekennzeichnet.

Weitere Einzelheiten und Vorteile der Erfindung sind
anhand der Zeichnungen näher erläutert. Es zeigt:

Fig. 1    eine perspektivische Ansicht
          eines Fernsehgeräts mit den
          erfindungswesentlichen Merkmalen, wobei das Gerät mit
          liegendem Empfangsteil und
          senkrecht aufgestecktem Bildteil dargestellt ist,

Fig. 2    eine perspektivische Ansicht
          eines Gerätes in tragbarer Kofferform, wobei das Bildteil
auf das Geräteempfangsteil geklappt ist,

Fig. 3     eine perspektivische Ansicht
des aus dem Geräteempfangsteil
herausgezogenen Gerätebildteils
mit scharnierartiger Steckleiste,

Fig. 4     eine perspektivische Ansicht
eines Fernsehgerätes mit einem
gegenüber der Fig. 1 umgesteckten Gerätebildteil,

Fig. 5     eine perspektivische Ansicht
ähnlich der Fig. 1, jedoch mit
geneigtem Gerätebildteil,

Fig. 6     eine perspektivische Ansicht
ähnlich Fig. 2, jedoch mit neben
dem Gerätebildteil angesteckten
Lautsprecherboxen,

Fig. 7     eine perspektivische Ansicht
ähnlich der Fig. 1, jedoch mit
vor dem Bildschirm geschwenkte
Lautsprecherboxen.

0084605

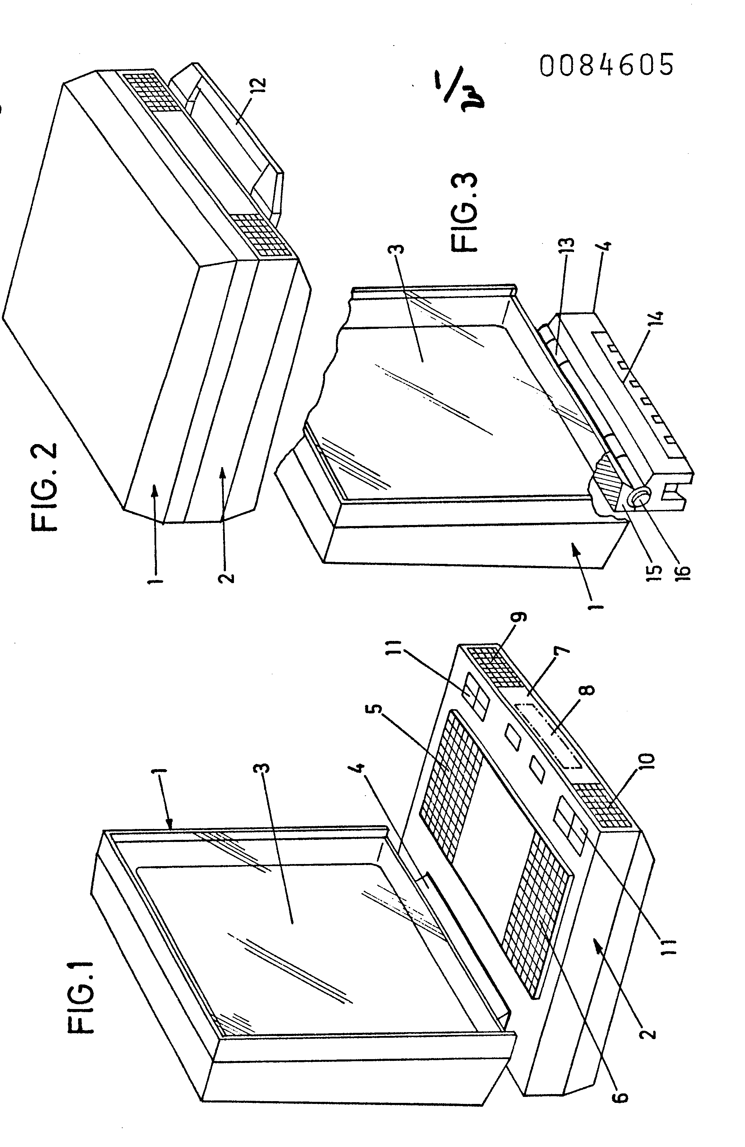

Aus der Fig. 1 ist ein Fernsehgerät ersichtlich, das im wesentlichen aus dem Gerätebildteil 1 und dem Geräteempfangsteil 2 besteht. Beide Geräteteile haben eine gleichartige Grundform und können deshalb nahezu deckungsgleich übereinandergelegt werden. Auf das flachliegende Geräteempfangsteil 2 ist das Gerätebildteil 1 im rückwärtigen Längsbereich auf die Oberseite des Geräteempfangsteils derart aufgesteckt, daß durch Kippen des flachen Gerätebildteils (s. Fig. 2) einekofferartig, den Bildschirm 3 schützende, tragbare Geräteeinheit entsteht. Hierzu ist die Steckleiste 4 (s. Fig. 3) als Scharnierleiste ausgebildet. Das Fernsehgerät weist nach Fig. 1 auf der Oberseite des Empfangsteils zwei seitlich eingebaute Lautsprecherboxen 5 und 6 auf, die mit mehreren Lautsprechern bestückt sind. Auf der schmalen Frontseite 7 des Geräteempfangsteils kann eine Kassetteneinschuböffnung8angeordnet sein, sofern das Fernsehgerät gleichzeitig mit einem Videorecorder ausgerüstet ist. An beiden Seiten der Frontseite 7 sind bedarfsweise Hochtonlautsprecher 9 und 10 eingebaut. Die wesentlichsten Bedienungselemente 11 des Gerätes befinden sich im vorderen Längebereich auf der Oberseite des Empfangsteils 2.

Die Fig. 2 zeigt ein aus einem Geräteempfangsteil 2 und dem Gerätebildteil 1 durch Zusammenklappen entstandenes tragbares Fernsehgerät in Kofferform. Der Bildschirm im Gerätebildteil ist hierbei während des Transports vor Beschädigung geschützt, und das Gerät über einen am Empfangsteil angebrachten Tragegriff 12 leicht transportierbar. Der Tragegriff wird im Bedarfsfall aus dem
Geräteempfangsteil herausgeklappt oder herausgezogen und
ist in Funktionsstellung des Gerätes (aufgeklapptes
Gerätebildteil) nicht sichtbar. Das Gerätebildteil wird
im zusammengeklappten Zustand in bekannter Weise mit dem
Geräteempfangsteil verriegelt.

Wie aus Fig. 3 ersichtlich, weist die Steckleiste 4, über
die das Gerätebildteil 1 auf das Geräteempfangsteil 2
aufsteckbar ist, ein Scharnier 13 auf. Das Scharnier 13
verbindet das Kontaktteil 14 mit dem Oberteil 15 der
Steckleiste 4. Das Scharnier ist so ausgebildet, daß
verschiedene rastbare Winkelstellungen des Gerätebildteils 1 gegenüber dem Geräteempfangsteil 2 möglich sind.
Die Rasterung des Scharniers kann durch Drücken auf einen
in der Längsachse des Scharniers angeordneten Druckknopf
16 aufgehoben werden.

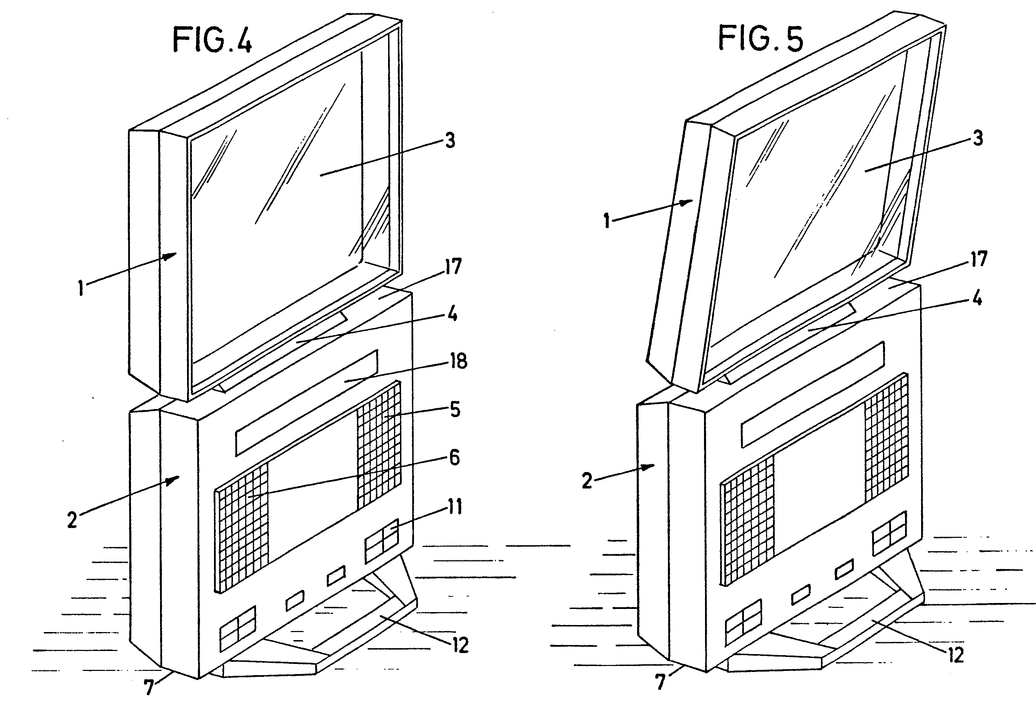

Nach Fig. 4 ist eine weitere Möglichkeit der Aufstellung
eines Fernsehgerätes gegenüber dem Geräteempfangsteil mit
umsteckbarem Gerätebildteil aufgezeigt. Das Gerätebildteil 1 ist an der schmalen Rückseite 17 des Geräteempfangsteils 2 angesteckt, wobei das Gerät mit der schmalen
Frontseite 7 nach unten aufgestellt ist. Bei einer Aufstellung des Fernsehgerätes in dieser Lage kann durch
eine entsprechende Ausgestaltung und Anordnung des Tragegriffs die Standfläche des Gerätes wesentlich vergrößert

0084605

werden. Der Tragegriff wird hierbei derart aus dem Empfangsteil herausgezogen und verschwenkt, daß der Griff
die schmale Gerätefrontseite erheblich erweitert. Die
nicht benötigte Öffnung für die unbenutzte Steckverbindung in der Deckfläche des Geräteempfangsteils ist
durch eine Abdeckung 18 verschlossen. Die Stereo-Lautsprecherboxen 5 und 6 strahlen bei dieser Anordnung
breitflächig in Richtung des Gerätebenutzers ab.

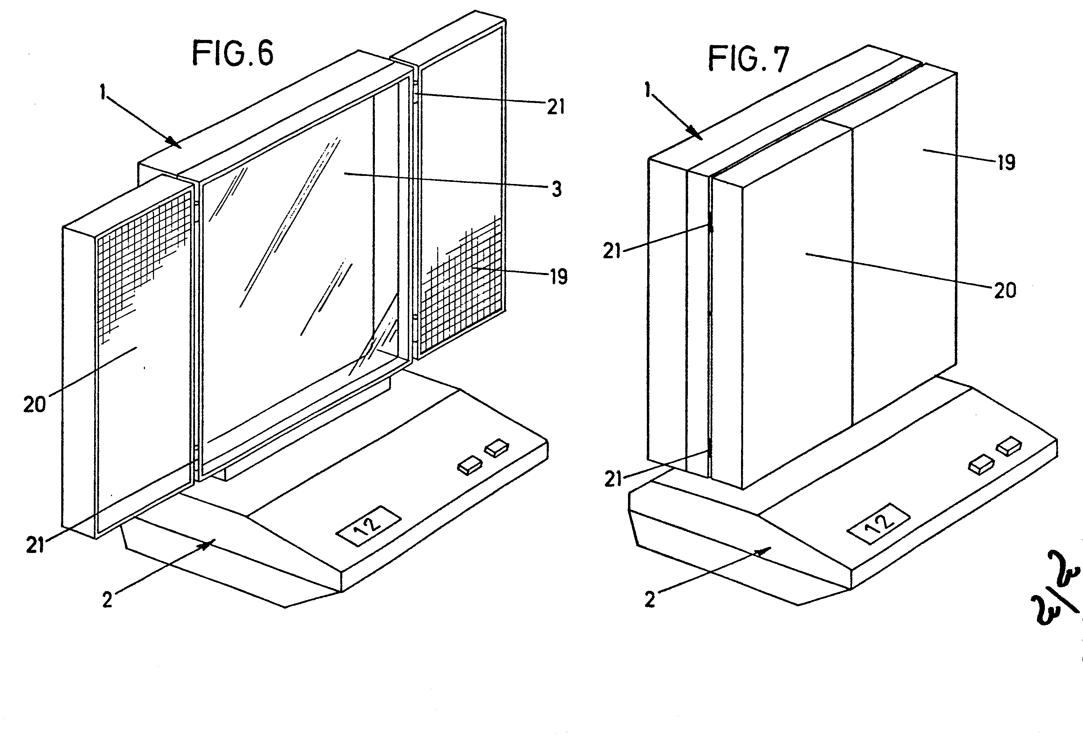

Aus der Fig. 5 ist der besondere Vorteil des kippbaren
Gerätebildteils 1 erkennbar. Der Bildschirm 3, eingesetzt im Gerätebildteil 1, ist in entsprechender Weise
in die für den Betrachter günstigste Lage zu kippen. Die
Vergrößerung der Standfläche des Gerätes durch den
Tragegriff 12 ist hierbei besonders erforderlich.

Die Fig. 6 zeigt ein Fernsehgerät mit einem schmalen
Bildschirm 3, bei dem das Gerätebildteil 1 senkrecht auf
ein pultartiges Geräteempfangsteil 2 aufgesteckt ist.
Auf beiden Seiten des Gerätebildteils 1 ist je eine Lautsprecher-Rechteckbox 19 und 20 über Steckscharniere 21
derart angeordnet, daß nach Einschwenken der Boxen 19 und
20 in den Bildschirmbereich der Bildschirm vollständig
abgedeckt ist, wie dies aus Fig. 7 ersichtlich ist.
Die Steckscharniere der Lautsprecher-Rechteckboxen 19,
20 sind derart ausgebildet, daß die elektrische Kontaktierung der Boxen über die Steckscharniere 21 erfolgt. Es
ist auch möglich, daß anstelle der Lautsprecher-Rechteckboxen zwei gegenüber dem Bildschirm 3 kleinere und ebenfalls besonders flache Bildschirme angeordnet sind. Diese kleineren Bildschirme können gegenüber einem Hauptbildschirm 3 als Nebenbildschirme angesehen werden und dienen dem gleichzeitigen Empfang von unterschiedlichen Fernsehprogrammen. Bei allen Fernsehgeräten der geschilderten Art weist das Geräteempfangsteil Einrichtungen auf, die den Einsatz von ergänzenden Bausteinen ermöglichen, die für den Empfang von Video- und Bildschirmtext, für das Kabelfernsehen und zur Geräteanpassung an verschiedene Farbfernsehnormen erforderlich sind.

- l -

# FERNSEHGERÄT

Patentansprüche

1. Aus mehreren Geräteteilen zusammensetzbares Fernsehgerät nach Patentanmeldung P 31 43 932.2, wobei ein Geräteteil, das einen besonders flachen Bildschirm enthält, wahlweise an mehrere Seiten eines Geräteempfangsteils über eine mechanisch und elektrisch verbindende Steckleiste ansteckbar ist, und das Gerätebild- und -empfangsteil eine flache rechteckige Gehäuseform aufweist, d a d u r c h g e k e n n z e i c h - n e t , daß die Steckleiste (4) als Scharnierleiste ausgebildet ist, und das Gerätebildteil (1) im rückwärtigen Längsbereich auf die Oberseite des Geräteempfangsteils (2) derart aufsteckbar ist, daß durch Kippen des flachen Gerätebildteils auf den flachen Geräteempfangsteil eine kofferartig zusammengeklappte, den Bildschirm schützende, tragbare Geräteeinheit entsteht.

2. Fernsehgerät nach Anspruch 1, d a d u r c h g e k e n n z e i c h n e t , daß das Gerätebildteil gegenüber dem Geräteempfangsteil in verschiedene Lagen kippbar ist.

3. Fernsehgerät nach den Ansprüchen 1 und 2, d a d u r c h g e k e n n z e i c h n e t , daß das Scharnier der Steckleiste (4) in verschiedenen Winkelstellungen rastbar ist.

4. Fernsehgerät nach den Ansprüchen 1 bis 3, d a d u r c h g e k e n n z e i c h n e t , daß die Rasterung des Scharniers durch Drücken auf einen vorzugsweise längs des Scharniers angeordneten Druckknopf (16) aufhebbar ist.

5. Fernsehgerät nach den Ansprüchen 1 bis 4, d a d u r c h g e k e n n z e i c h n e t , daß das Geräteempfangsteil einen in bekannter Weise ausklappbaren oder ausziehbaren Tragegriff (12) aufweist.

6. Fernsehgerät nach den Ansprüchen 1 bis 5, d a d u r c h g e k e n n z e i c h n e t , daß bei aufgestellter oder aufgehängter Geräte-Betriebslage das Gerätebildteil (1) über die scharnierartige Steckleiste (4) an der schmalen Rückseite des Geräteempfangsteils ansteck- und kippbar ist.

7. Fernsehgerät nach den Ansprüchen 1 bis 6, d a d u r c h  g e k e n n z e i c h n e t ,  daß das Geräteempfangsteil (2) einen Kassetten-Videorecorder aufweist.

8. Fernsehgerät nach den Ansprüchen 1 bis 7, d a d u r c h  g e k e n n z e i c h n e t ,  daß das Geräteempfangsteil Einrichtungen aufweist, die den Einsatz von Bausteinen ermöglichen, die für den Empfang von Video- und Bildschirmtext, für das Kabelfernsehen sowie für unterschiedliche Farbfernseh-Normen erforderlich sind.

9. Fernsehgerät nach den Ansprüchen 1 bis 8, d a d u r c h  g e k e n n z e i c h n e t ,  daß zu beiden Seiten des Gerätebildteils je eine Lautsprecherbox (19,20) über ein Steckscharnier (21) derart angeordnet ist, daß nach Einschwenken der Lautsprecherbox in den Bildschirmbereich der Bildschirm (3) vollständig abdeckbar ist.

10. Fernsehgerät nach den Ansprüchen 1 bis 9, d a d u r c h  g e k e n n z e i c h n e t ,  daß die Lautsprecherboxen (19,20) über die Steckscharniere (21) elektrisch kontaktierbar sind.

11. Fernsehgerät nach den Ansprüchen 1 bis 10, d a d u r c h  g e k e n n z e i c h n e t ,  daß die.

Lautsprecherboxen Einrichtungen zur Wandbefestigung aufweisen.

12. Fernsehgerät nach den Ansprüchen 1 bis 11,
d a d u r c h   g e k e n n z e i c h n e t , daß der
Tragegriff (12) derart aus dem Geräteempfangsteil (2)
herauszuziehen und/oder zu verschwenken ist, daß sich
die Standfläche des auf die schmale Frontseite (7) aufgestellten Fernsehgeräts vergrößert.

13. Fernsehgerät nach den Ansprüchen 1 bis 12,
d a d u r c h   g e k e n n z e i c h n e t , daß zu
beiden Seiten des Hauptbildschirmes (3) im Gerätebildteil je ein weiterer kleinerer rechteckiger und flacher
Nebenbildschirm über eine Scharnieranordnung derart
angebracht ist, daß nach Einschwenken der Nebenbildschirme in den Bereich des Hauptbildschirmes der Hauptbildschirm teilweise oder vollständig abdeckbar ist.

- 5 -                    Beschreibung:

FIG.1

FIG. 2

FIG.3

2/3

00084605

Reg. 1866

FIG.4

FIG.5

2/3

00084605

# FIG.6

1
21
3
19
20
21
2
12

# FIG.7

1
21
19
20
21
2
12

0084605  2/2

## EINSCHLÄGIGE DOKUMENTE

EP 82109462.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FUNKSCHAU, Heft 12, 1979, München<br>"Über den Flachbildschirm zum Taschenfernseher" Si.<br>Seiten 703,704<br>　　* Fig. 3,4 *<br><br>-- | | H 04 N 5/64 |
| A | FR - A - 1 468 695 (JANSSEN)<br>　　* Fig. 1,1a,3 *<br><br>-- | | |
| A | FR - A - 1 408 075 (BRAUN)<br>　　* Fig.; Seite 1, Spalte 1,<br>　　1. Absatz; Seite 1, Spalte 2,<br>　　letzter Absatz - Seite 2,<br>　　Spalte 2, 1. Absatz *<br><br>---- | | |

|  |
|---|
| **RECHERCHIERTE SACHGEBIETE (Int. Cl. ³)** |
| H 04 N 5/00 |
| H 04 B 1/00 |
| H 05 K 5/00 |
| H 05 K 7/00 |

Der vorliegende Recherchenbericht wurde für alle Patentansprüche erstellt.

| Recherchenort | Abschlußdatum der Recherche | Prüfer |
|---|---|---|
| WIEN | 04-05-1983 | BENISCHKA |